# EUROPEAN PATENT APPLICATION

(11) **EP 1 793 376 A1**
(43) Date of publication of application: **06.06.2007**
(21) Application number: 05111588.9
(22) Date of filing: 01.12.2005
(51) Int. Cl.: G11B 7/08, G11B 7/135, G11B 7/085, G11B 25/04

(54) **Fast optical recording apparatus**

(71) Applicant: Thomson Licensing S.A., 92100 Boulogne-Billancourt (FR)
(72) Inventor: Bruckert, Sebastien, 21130 Auxonne (FR); Leclaire, Alain, 89550 Hery (FR); Raulin, Philippe, 21110 Tart (FR); Cattaneo, Celine, 21490 Bellefond (FR)
(74) Representative: Thies, Stephan

(57) **Abstract**

The present invention relates to an apparatus for reading from and/or writing to optical recording media, which is capable of high-speed reading and/or recording using multiple pickups. According to one aspect of the invention, at least two adjacent pickups are arranged head to tail, or the optics bodies of at least two pickups are located on different levels. According to a further aspect of the invention, in an apparatus having four or more pickups, which are arranged crosswise around a motor for rotating an optical recording medium, at least one of the pickups is arranged at an angle with regard to the crosswise arrangement.

## Description

The present invention relates to an apparatus for reading from and/or writing to optical recording media, which is capable of high-speed reading and/or recording.

Nowadays a plurality of devices for reading from and/or writing to optical recording media are available to consumers, e.g. for CD (Compact Disk) or DVD (Digital Versatile Disk). These devices generally allow to read from and/or write to a recording medium with an increased speed using a higher rotation speed of the optical recording medium, e.g. 2X, 4X, 8X etc., where X denotes the nominal speed associated to the recording medium. While reading can generally be performed at even higher rotation speeds, the rotation speed for recording is still limited by the available recording media. For recording a two hours movie on a DVD a 8X recorder needs approximately 15 minutes. While this is acceptable for a consumer electronics device, there are circumstances where the time needed for recording has to be reduced even more. For example, US 2004/0064377 discloses a Kiosk machine that allows customers to browse a movie database, view movie descriptions, and then have a copy of the movie recorded on a DVD disk. For such a system a recording time of approximately one minute is desirable.

Instead of or in addition to using an increased rotation speed, it has been proposed for example in JP 11-167762 to use multiple pickups for simultaneously accessing different parts of an optical disk. The document does, however, not disclose how to arrange these multiple pickups relative to a motor for rotating the optical disk.

It is an object of the invention to propose an apparatus for reading from and/or writing to optical recording media using multiple pickups.

According to one aspect of the invention, this object is achieved by an apparatus for reading from and/or writing to optical recording media having two or more pickups for reading from and/or writing to an optical recording medium, wherein the optics bodies of at least to pickups are located on different levels. This arrangement is especially useful if there isn't enough space to place the whole pickups side by side as it makes more space available for the actuators, which can hence be brought very close together. At the same time the performance of the pickup is not affected.

According to a further aspect of the invention, this object is also achieved by an apparatus for reading from and/or writing to optical recording media having four or more pickups for reading from and/or writing to an optical recording medium, which are arranged crosswise around a motor for rotating an optical recording medium, wherein at least one of the pickups is arranged at an angle with regard to the crosswise arrangement. This solution allows to use four or more standard pickups without conflicts between the optics bodies of the pickups.

According to still a further aspect of the invention, this object is also achieved by an apparatus for reading from and/or writing to optical recording media having two or more pickups for reading from and/or writing to an optical recording medium, wherein at least two adjacent pickups are arranged head to tail. This solution has the advantage that two standard pickups can be arranged very close together. Of course, the phase of one of the pickups has to be inverted.

Of course, the above discussed solutions can easily be combined. For example, an apparatus may have two or more pickups, wherein at least two adjacent pickups are arranged head to tail and with their optics bodies located on different levels.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: schematically shows an arrangement of four pickups relative to an optical recording medium,
- Fig. 2: depicts a three-dimensional view of four pickups arranged crosswise relative to a motor,
- Fig. 3: shows a top view with dimensions of the arrangement of Fig. 2,
- Fig. 4: depicts a three-dimensional view of an alternative arrangement of four pickups relative to a motor,
- Fig. 5: shows a top view with dimensions of the arrangement of Fig. 4.
- Fig. 6: schematically shows an arrangement of five pickups relative to an optical recording medium,
- Fig. 7: depicts a three-dimensional view of five pickups arranged relative to a motor,
- Fig. 8: shows a top view with dimensions of the arrangement of Fig. 7,
- Fig. 9: schematically shows an arrangement of six pickups relative to an optical recording medium,
- Fig. 10: depicts a three-dimensional view of six pickups arranged relative to a motor,
- Fig. 11: depicts a top view of the arrangement of Fig. 10,
- Fig. 12: depicts a three-dimensional view of the arrangement of Fig. 10 with a special motor,
- Fig. 13: depicts a three-dimensional view of six pickups with modified optics bodies arranged relative to a motor,
- Fig. 14: schematically shows an arrangement of eight pickups relative to an optical recording medium,
- Fig. 15: depicts a three-dimensional view of eight pickups arranged relative to a motor,
- Fig. 16: shows a top view with dimensions of the arrangement of Fig. 15,
- Fig. 17: shows a three-dimensional view of a pickup with separated optics body and actuator as used in Fig. 15, and
- Fig. 18: depicts a three-dimensional view of two adjacent pickups as used in Fig. 15.

In the following the pickup arrangements are discussed with regard to their writing performance. Of course, the arrangements can likewise be used for reading.

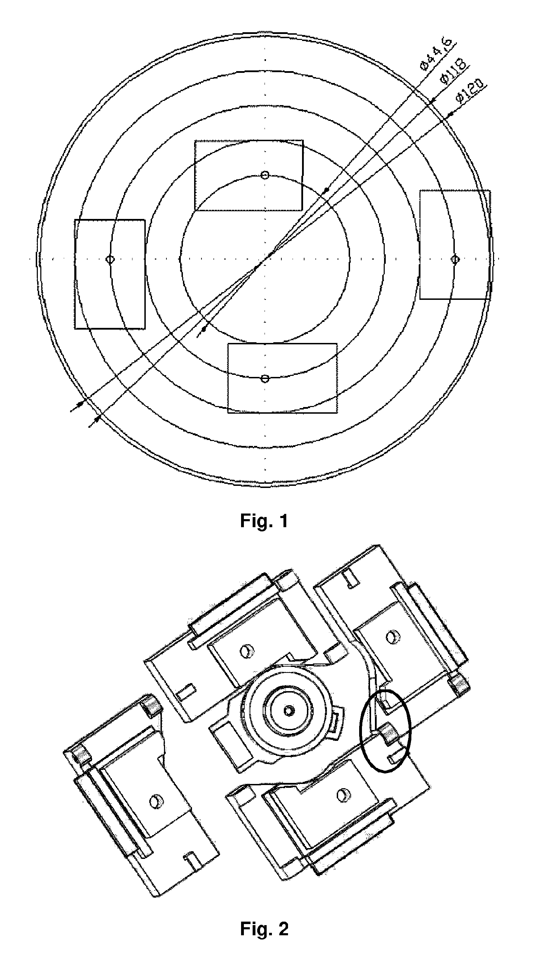

In Fig. 1 an arrangement of four pickups relative to an optical recording medium is shown schematically. Depicted are the four pickups with their respective light spots for reading and/or writing, and an optical recording medium, in this case a DVD. Also shown in the figure are the outer diameter of the optical recording medium (120mm) and the inner and outer diameter of the data area of the optical recording medium (44,6mm and 118mm, respectively). In this arrangement the pitch between the lenses of the different pickups in order to cover the complete data area is 9.18mm. The writing time of a DVD+RW driven at 8X is 2min 30s. The writing time of a DVD+/-R driven at 16X is 1min 15s.

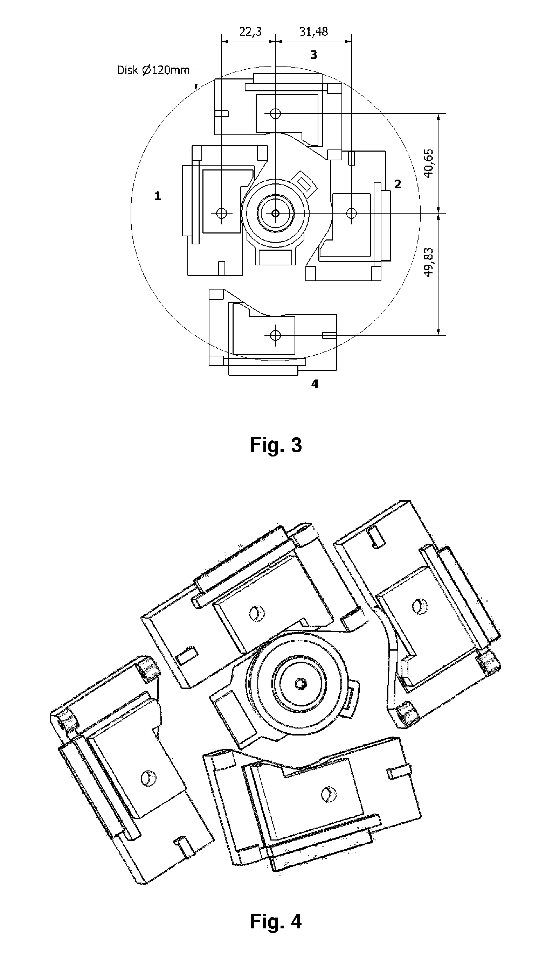

A three-dimensional view of an exemplary arrangement of the four pickups is shown in Fig. 2. A top view with dimensions of this arrangement is depicted in Fig. 3. In this arrangement four standard 16 X pickups are arranged crosswise relative to the motor. Indicated by the ellipse in Fig. 2 is an area where the optics bodies of two pickups interfere. Therefore, a small modification of one optics body is necessary in order to achieve an accessible range from 22.3mm to 59mm.

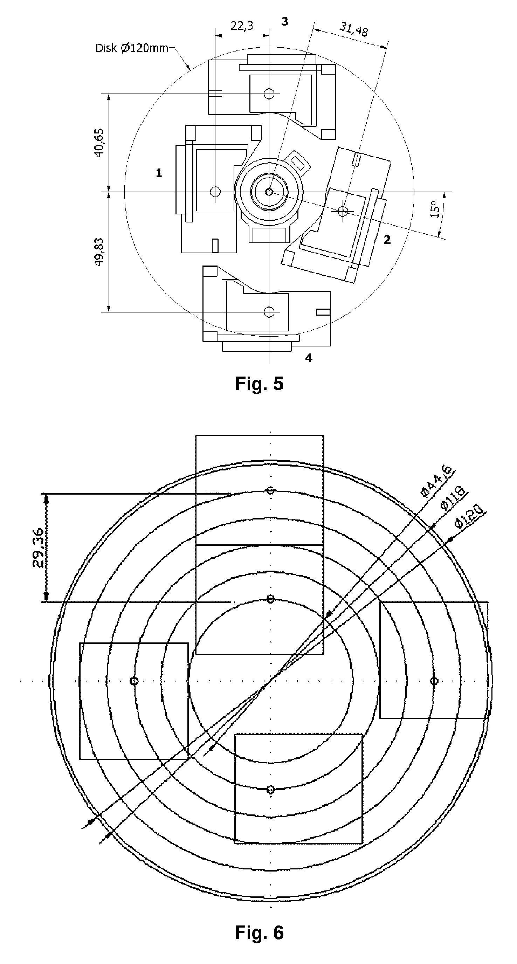

A three-dimensional view of an alternative arrangement of the four pickups is shown in Fig. 4. A top view with dimensions of this arrangement is depicted in Fig. 5. In this arrangement one pickup is arranged at an angle of 15° relative to the axis running through the center of the motor and the light spot of the opposite pickup. In this configuration four standard optical pickups can be employed without modifications.

In Fig. 6 an arrangement of five pickups relative to an optical recording medium is shown schematically. In this arrangement the pitch between the lenses of the different pickups in order to cover the complete data area is 7.34mm. The maximum width of at least the both adjacent pickups is 29.36mm. The writing time of a DVD+RW driven at 8X is 2min. The writing time of a DVD+/-R driven at 16X is 1min.

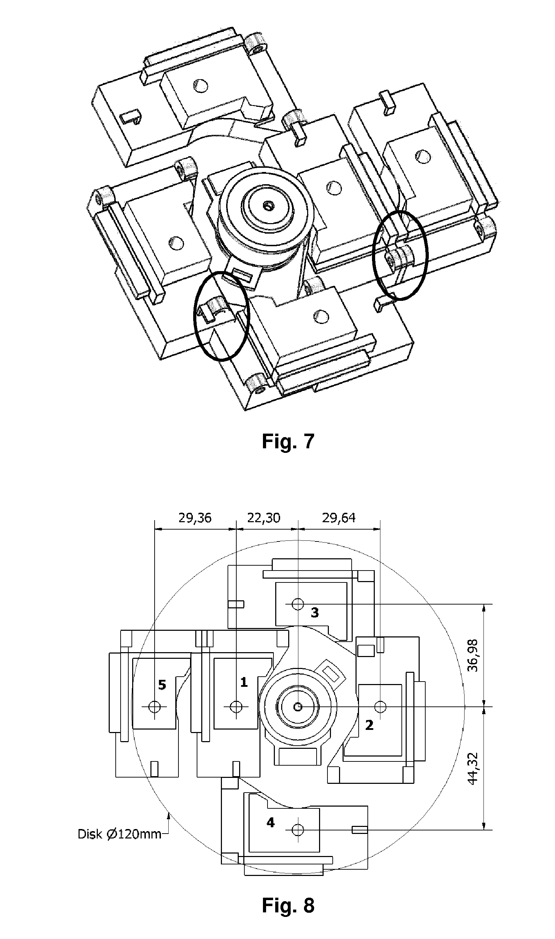

A three-dimensional view of an exemplary arrangement of the five pickups is shown in Fig. 7. A top view with dimensions of this arrangement is depicted in Fig. 8. Two areas where the optics bodies of two pickups interfere are indicated by the ellipses. Therefore, small modifications of two optics bodies are necessary.

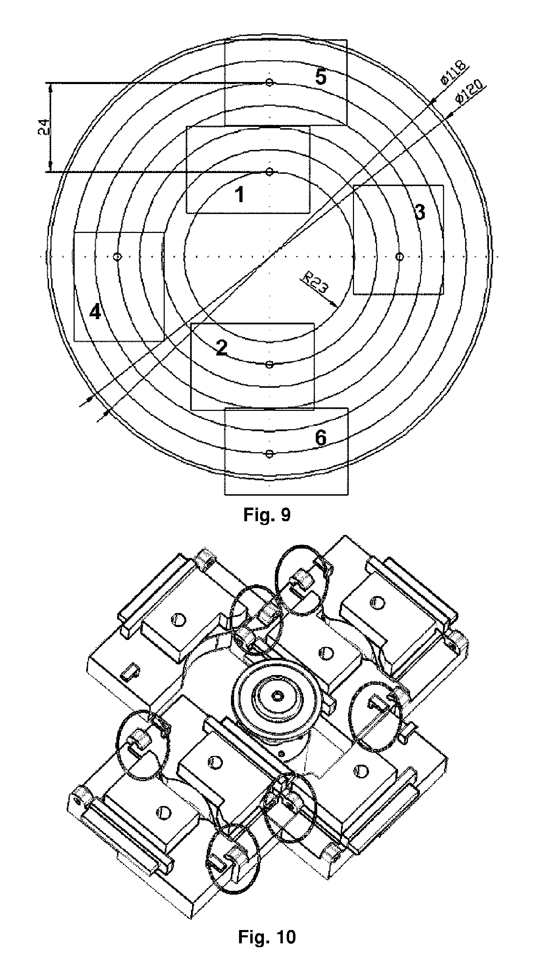

In Fig. 9 an arrangement of six pickups relative to an optical recording medium is shown schematically. In this arrangement the pitch between the lenses of the different pickups in order to cover the complete data area is 6mm. The maximum width of at least the adjoining pickups is 24mm. The writing time of a DVD+RW driven at 8X is 1min 40s. The writing time of a DVD+/-R driven at 16X is 50s.

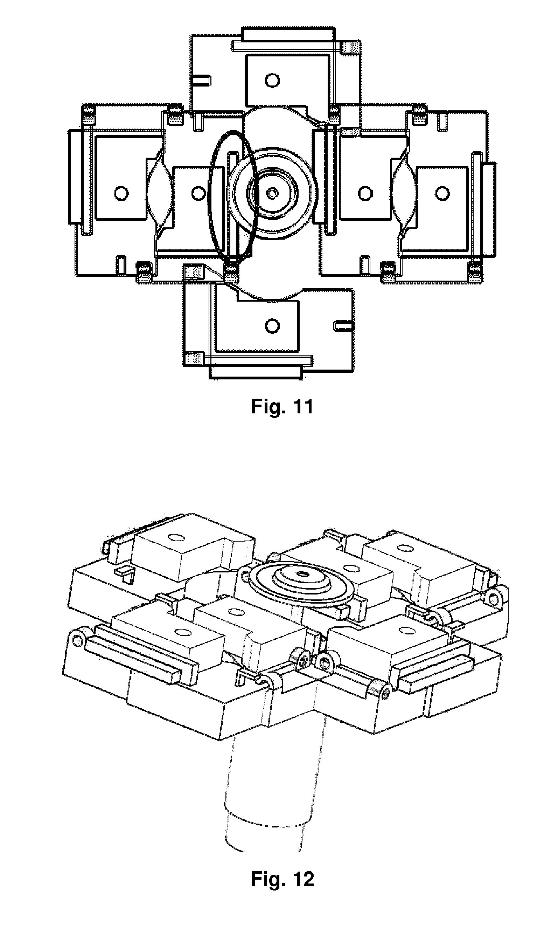

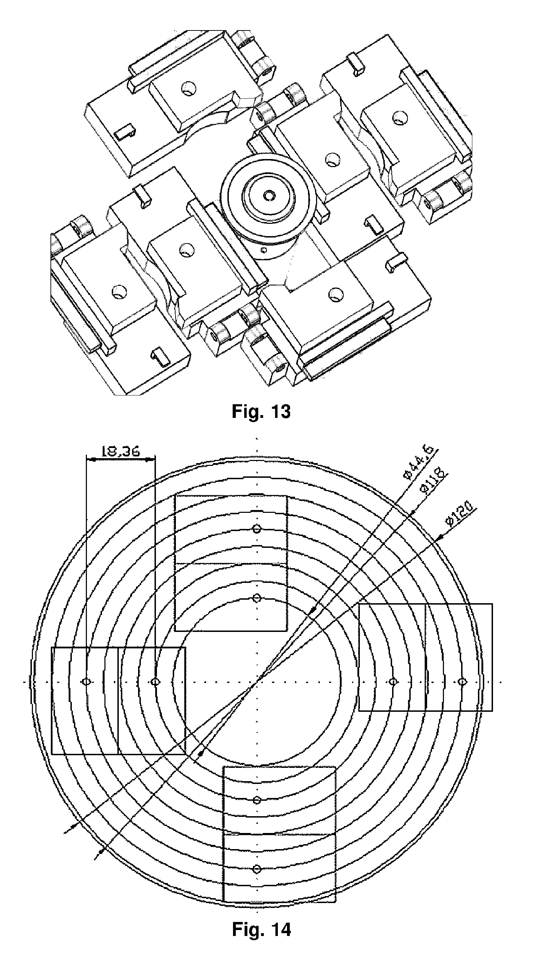

A three-dimensional view of an exemplary arrangement of the six pickups is shown in Fig. 10. A top view of this arrangement is depicted in Fig. 11. In this configuration the neighboring pickups are arranged head to tail. In this way there are no conflicts between the actuators. However, for two of the pickups the phase needs to be reversed. Unfortunately, a plurality of conflicts occur between the different optics bodies, as indicated by the ellipses. In addition, as indicated by the ellipse in Fig. 11, a further conflict arises between the optics body of the innermost pickup and the motor when a standard brushless motor is used. The latter conflict is overcome by using a special motor with a long axle, as depicted in Fig. 12. The conflicts between the different optics bodies are solved by using modified optics bodies as shown in Fig. 13. No modifications of the optical path inside the optics bodies are necessary.

In Fig. 14 an arrangement of eight pickups relative to an optical recording medium is shown schematically. In this arrangement the pitch between the lenses of the different pickups in order to cover the complete data area is 4.59mm. The maximum width of the pickups is 18.36mm. The writing time of a DVD+RW driven at 8X is 1min 15s. The writing time of a DVD+/-R driven at 16X is 37s.

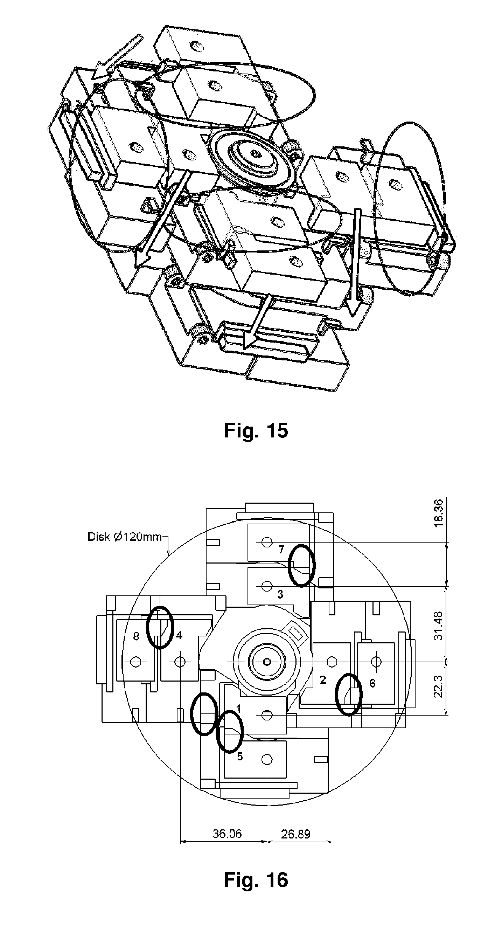

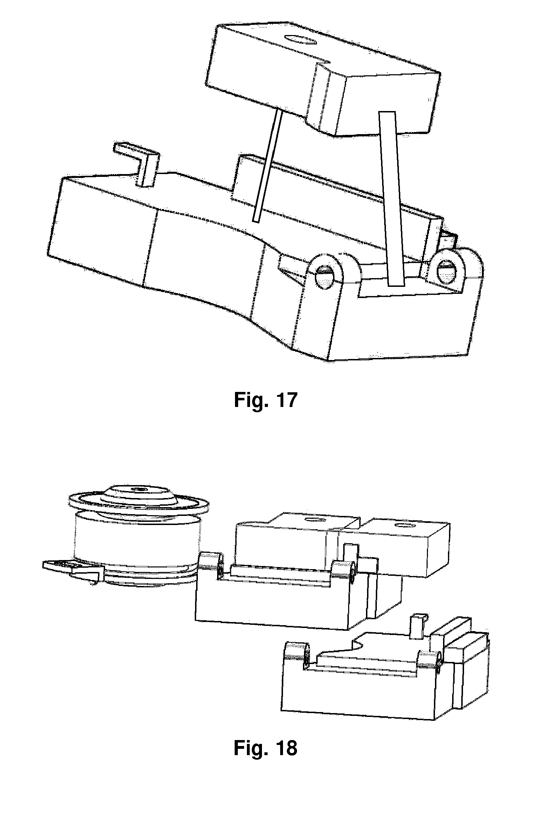

A three-dimensional view of an exemplary arrangement of the eight pickups is shown in Fig. 15. A top view with dimensions of this arrangement is depicted in Fig. 16. In this example the ellipses in Fig. 15 indicate four pickups used in a standard configuration, while the arrows indicate four modified pickups. The main modification, which will be explained below with reference to Figs 17 and 18, consists in moving the optics body about 15mm down, while keeping the position of the actuators. As marked by the ellipses in Fig. 16, despite moving down the optics bodies of four pickups several conflicts between optics bodies and between actuator occur.

The idea behind this arrangement is to separate the actuator and the optical body of the pickup. Before the objective lens of the actuator the light beam passes through a collimating lens on the optics body. Therefore, the light beam is collimated between the optics body and the actuator and a translatory movement of the actuator away from the optics body does not reduce the performance of the pickup.

Fig. 17 shows a three-dimensional view of a pickup with separated optics body and actuator. At the right side of the actuator a flexiboard for the electrical connection of the actuator to the optics body is shown schematically. In the center of the actuator the collimated light beam is indicated. For the separation of the optics body and the actuator a holding element (not shown) is placed between the optics body and the actuator. This holding element has reference surfaces for adjusting the actuator in the X- and Y-direction.

Fig. 18 depicts a three-dimensional view of two adjacent pickups. As can be seen from the figure, by placing the optics bodies on different levels more space is available for the actuators, which can hence be brought very close together. This arrangement is, consequently, especially useful if there isn't enough space to place the whole pickups side by side.

## Claims

1. Apparatus for reading from and/or writing to optical recording media having two or more pickups for reading from and/or writing to an optical recording medium, **characterized in that** the optics bodies of at least to pickups are located on different levels.

2. Apparatus for reading from and/or writing to optical recording media having four or more pickups for reading from and/or writing to an optical recording medium, which are arranged crosswise around a motor for rotating an optical recording medium, **characterized in that** at least one of the pickups is arranged at an angle with regard to the crosswise arrangement.

3. Apparatus for reading from and/or writing to optical recording media having two or more pickups for reading from and/or writing to an optical recording medium, **characterized in that** at least two adjacent pickups are arranged head to tail.
